# EUROPÄISCHE PATENTSCHRIFT

(11) **EP 3 682 977 B1**
(45) Veröffentlichungstag und Bekanntmachung des Hinweises auf die Patenterteilung: **17.08.2022**
(21) Anmeldenummer: 19020026.1
(22) Anmeldetag: 16.01.2019
(51) Int. Cl.: B07B 1/55, B01D 29/03, B01D 29/68

(54) **BOGENSIEBREINIGUNG VON SIEBDURCHGANGSSEITE**
CURVED SCREEN CLEANING OF SCREEN MESH
NETTOYAGE DE TAMIS COURBE DU CÔTÉ PASSAGE À TRAVERS LE TAMIS

(43) Veröffentlichungstag der Anmeldung: 22.07.2020
(73) Patentinhaber: BOTEC - Scheitza GmbH, 84149 Velden (DE)
(72) Erfinder: SCHEITZA, Andreas, 84149 Velden (DE)
(74) Vertreter: von Bülow & Tamada

(56) Entgegenhaltungen:
- EP-A2- 0 567 208
- CN-A- 102 989 703
- US-A1- 2014 209 530

## Beschreibung

Die vorliegende Erfindung betrifft eine Vorrichtung gemäß dem Oberbegriff des Anspruchs 1.

Eine Vorrichtung gemäß dem Oberbegriff des Anspruchs 1 ist aus der US 4,202,777 B bekannt.

Aufgabe der Erfindung ist, die bekannte Vorrichtung zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung, umfasst eine Vorrichtung zum Trennen eines Aufgabegutes in ein Grobgut und ein Siebgutgut ein sich in einer Längsrichtung, sich in einer quer zur Längsrichtung liegenden Querrichtung und sich in einer quer zur Längsrichtung und quer zur Querrichtung liegenden Höhenrichtung erstreckendes und einen Innenraum einhausendes Gehäuse mit einem Aufgabegutzugang zum Einführen des Aufgabegutes in den Innenraum, mit einem in der Höhenrichtung gesehen unterhalb des Aufgabegutzugangs angeordneten und aus dem Innenraum führenden Grobgutausgang und mit einem in der Höhenrichtung gesehen unterhalb des Aufgabegutzugangs angeordneten und aus dem Innenraum führenden Siebgutausgang, und ein im Innenraum angeordnetes und den Aufgabezugang sowie den Grobgutausgang vom Siebgutausgang trennendes Bogensieb mit einer zum Siebgutausgang gerichteten Siebsdurchgangsseite und einer der Siebdurchgangsseite gegenüberliegenden Siebaufgabeseite. Erfindungsgemäß umfasst die angegebene Vorrichtung eine auf die Siebdurchgangsseite des Bogensiebs gerichtete Spüldüse, welche eingerichtet ist, eine Reinigungsflüssigkeit auf die Siebdurchgangsseite des Bogensiebes gerichtet auszugeben.

Der angegebenen Vorrichtung liegt die Überlegung zugrunde, dass das Bogensieb in periodischen Abständen gereinigt werden muss, um einen zuverlässigen Siebbetrieb zu gewährleisten. Hierzu kann das Bedienpersonal des Bogensiebes das Gehäuse öffnen und die Siebgutaufgabeseite per Hand reinigen. Allerdings ist dies ein sehr zeitaufwändiger Vorgang, in dem die angegebene Vorrichtung still steht.

Aus diesem Grund wird in der angegebenen Vorrichtung vorgeschlagen, das Bogensieb automatisch zu reinigen. Hier wäre es zwar grundsätzlich möglich, das Bogensieb von der Siebaufgabeseite her zu reinigen. Allerdings liegt der Erfindung die Erkenntnis zugrunde, dass eine Reinigung von der Siebdurchgangsseite her viel effizienter ist, weil im Bogensieb hängen gebliebenes Siebgut durch die Reinigung von der Siebdurchgangsseite her wieder zurückgedrängt wird, so dass sich das Bogensieb auf diese Weise in deutlich geringerer Zeit reinigen lässt, als wenn es von der Siebaufgabeseite her gereinigt werden würde.

Auf diese Weise kann der Stillstand der angegebenen Vorrichtung während der Reinigung des Bogensiebes deutlich reduziert werden.

In einer Weiterbildung umfasst die angegebene Vorrichtung einen Düsenarm, auf dem die Spüldüse angeordnet ist. Durch den Spülarm lässt sich die Spüldüse nicht nur exakt in einer gewünschten Lage auf die Siebdurchgangsseite ausrichten, der Düsenarm stellt auch gleichzeitig eine geeignete Führungsmöglichkeit für die Reinigungsflüssigkeit zur Spüldüse dar.

In einer zusätzlichen Weiterbildung umfasst die angegebene Vorrichtung eine weitere auf dem Düsenarm angeordnete Spüldüse, wobei die beiden Düsen eingerichtet sind, die Reinigungsflüssigkeit in verschiedenen Richtungen auf die Siebdurchgangsseite des Bogensiebes gerichtet auszugeben. Auf diese Weise lässt sich die Reinigungsflüssigkeit über einen größeren Wirkflächenbereich verteilt auf die Siebdurchgangsseite ausgeben.

In einer noch weiteren Weiterbildung der angegebenen Vorrichtung sind die beiden Düsen achsparallel bezüglich einer Flächennormalen des Bogensiebs angeordnet, so dass der zuvor genannte Wirkflächenbereich auf beiden Seiten des Düsenarmes im Wesentlichen gleich groß ist.

In einer anderen Weiterbildung der angegebenen Vorrichtung ist das Bogensieb in einer vom Aufgabezugang zum Grobgutausgang gesehenen Überlaufrichtung mit einer Bogenform und quer zur Überlaufrichtung gesehen gerade ausgebildet, wobei der Spülarm an die Bogenform des Bogensiebes angepasst ist. Auf diese Weise wird ein konstanter Abstand zwischen Spülarm und Bogensieb erreicht, so dass eine Ausgabekraft, mit der die Reinigungsflüssigkeit die Spüldüsen verlässt, im Wesentlichen gleich über das Bogensieb verteilt ist.

In einer zusätzlichen Weiterbildung umfasst die angegebene Vorrichtung ein Linearlager, das den Spülarm quer zur Überlaufrichtung beweglich lagert. Auf diese Weise kann der insbesondere an die Bogenform des Siebes angepasste Spülarm in technisch einfacher Weise über das Bogensieb bewegt werden, um den oben genannten Wirkflächenbereich zu erweitern.

In einer weiteren Weiterbildung der angegebenen Vorrichtung umfasst das Linearlager eine Kegelrolle, die beispielsweise von der Siebdurchgangsseite weggerichtet sein kann. Dabei kann die Kegelrolle vorzugsweise auf einer quer zur Überlaufrichtung verlaufenden Führungsschiene aufliegen, die aus der Höhenrichtung gesehen konkav ausgebildet ist. Durch die konkave Ausführung wird eine Haltekraft von auf die Führungsschiene auffallendem Siebgut auf dieser gesenkt, so dass weniger Siebgut auf der Führungsschiene verbleibt und die Linearführung so wenig verschmutzt. Ein auf der Führungsschiene verbleibender Rest von Siebgut wird durch die Kegelrolle dabei gemahlen.

In einer besonderen Weiterbildung umfasst die angegebene Vorrichtung ein weiteres Linearlager, wobei die Kegelrolle entgegen der Längsrichtung ausgerichtet ist und das weitere Linearlager den Spülarm entgegen der Längsrichtung beabstandet zur Kegelrolle quer zur Überlaufrichtung beweglich lagert. Auf diese Weise wird der Spülarm durch die beiden Linearlager in der Längsrichtung sicher fixiert, so dass der Spülarm ausschließlich einen Freiheitsgrad zur Bewegung in der Querrichtung hat.

Zwar kann der Spülarm grundsätzlich per Hand bewegt werden, allerdings ist für eine automatische Reinigung des Bogensiebes in bestimmten Abständen ein Motor zum Bewegen des Spülarmes auf dem Linearlager besonders zweckmäßig.

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 eine Querschnittsansicht einer Vorrichtung zum Trennen eines Aufgabegutes in ein Grobgut und ein Siebgutgut, und
Fig. 2 eine perspektivische Explosionsansicht einer Reinigungseinheit in der Vorrichtung der Fig. 1.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

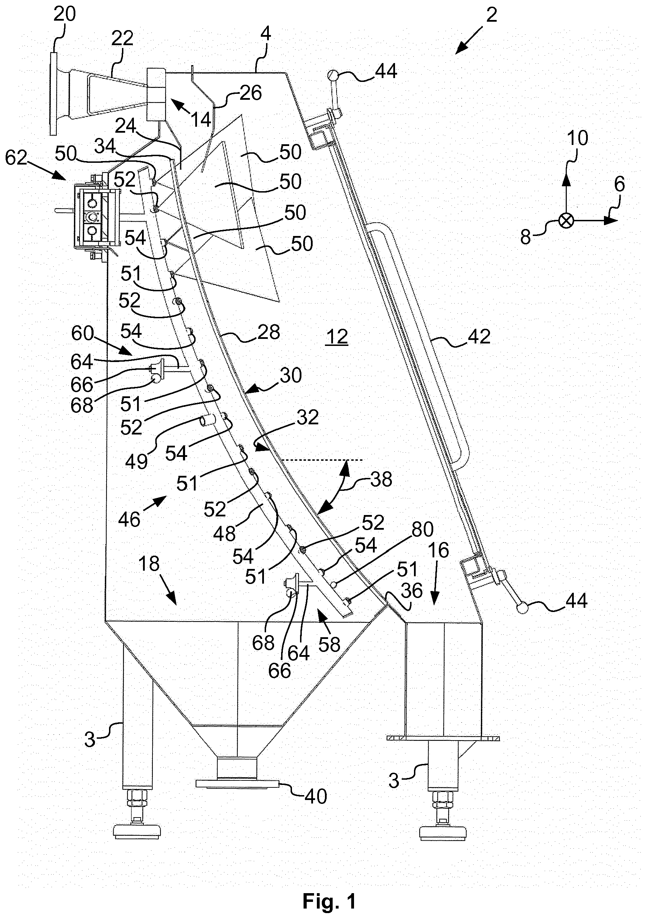

Es wird auf Fig. 1 Bezug genommen, die eine Vorrichtung 2 zum Trennen eines Aufgabegutes in ein Grobgut und ein Siebgutgut zeigt.

Die Vorrichtung 2 besitzt ein auf nivellierbaren Füßen 3 getragenes Gehäuse 4, welches sich in einer Längsrichtung 6, sich in einer quer zur Längsrichtung 6 liegenden Querrichtung 8 und sich in einer quer zur Längsrichtung 8 und quer zur Querrichtung 8 liegenden Höhenrichtung 10 erstreckt.

Das Gehäuse 4 haust einen Innenraum 12 ein und besitzt einen Aufgabegutzugang 14 zum Einführen des Aufgabegutes in den Innenraum 12 sowie einen in der Höhenrichtung 10 gesehen unterhalb des Aufgabegutzugangs 14 angeordneten Grobgutausgang 16, über den sich aus dem Innenraum 12 das Grobgut abführen lässt. Ferner besitzt das Gehäuse 4 einen in der Höhenrichtung 10 gesehen unterhalb des Aufgabegutzugangs 14 angeordneten Siebgutausgang 18, über den sich aus dem Innenraum 12 das Siebgut abführen lässt.

An den Aufgabegutzugang 14 ist ein Mündungstrichter 20 angeschlossen, der auf seiner dem Gehäuse 4 gegenüberliegenden Ende einen Zuführflansch 22 besitzt. An den Zuführflansch 22 lässt sich so ein Zuführschlauch anschließen, aus dem dann das zu trennende Aufgabegut über den Mündungstrichter 20 in den Aufgabegutzugang 14 und damit in den Innenraum 12 eingeführt werden kann. Im Innenraum 12 können sich an den Aufgabegutzugang 14 ein erstes Führungselement 24 und ein zweites Führungselement 26 anschließen, zwischen denen der Aufgabegutzugang 14 angeordnet ist. Auf diese Weise kann das in den Innenraum 12 eingeführte Aufgabegut in eine vorgegebene Richtung gelenkt werden. In der vorliegenden Ausführung ist diese vorgegebene Richtung entgegen der Höhenrichtung 10 ausgerichtet.

Im Innenraum 12 ist in der Höhenrichtung 10 gesehen unterhalb der beiden Führungselemente 24, 26 ein Bogensieb 28 mit einer Siebaufgabeseite 30 und einer Siebdurchgangsseite 32 angeordnet. Die Siebaufgabeseite 30 des Bogensiebs 28 ist dabei zu den Führungselementen 24, 26 hin gerichtet, während die Siebabgabeseite 32 des Bogensiebs 28 von den Führungselementen 24, 26 weg gerichtet ist. Auf diese Weise fällt das von den Führungselementen 24, 26 in die vorgegebene Richtung gelenkte Aufgabegut auf die Siebaufgabeseite 30 und kann in das Grobgut und das Siebgut getrennt werden.

Für diese Trennung ist das Bogensieb 28 entgegen der Längsrichtung 6 und der Höhenrichtung 10 gesehen mit seiner Siebaufgabeseite 30 konkav und mit seiner Siebabgabeseite 32 konvex ausgebildet. Eine in der Längsrichtung 6 gesehene Vorderseite 34 des Bogensiebes 28 ist unterhalb der beiden Führungselemente 24, 26 angeordnet, während eine in der Längsrichtung 6 gesehene Rückseite 36 am Grobgutausgang 16 angeordnet ist. Durch die konkave Form der Siebaufgabeseite 30 nimmt eine Steilheit 38 des Bogensiebes 28 vom Aufgabegutzugang 14 her zum Grobgutausgang 16 hin ständig ab, so dass die Siebwirkung durch ein stetiges Abbremsen des Aufgabegut zum Grobgutausgang 16 hin erreicht wird. Dabei fällt das Siebgut durch nicht weiter gezeigte Siebmaschen des Bogensiebes 28 und gelangt so in den Siebgutausgang 18, während das Grobgut, welches nicht durch die Maschen des Bogensiebes 28 passt, schließlich durch immer weiter nachkommendes Aufgabegut aus dem Aufgabegutzugang 14 letztlich in den Grobgutausgang 16 geschoben wird.

Der Siebgutausgang 18 ist in Form eines Trichters ausgebildet, an dessen entgegen der Höhenrichtung 10 gesehenen Ende ein Entnahmeflansch 40 ausgebildet ist. An den Entnahmeflansch 40 lässt sich ein Entnahmeschlauch anschließen, über den sich das Siebgut aus dem Innenraum 12 des Gehäuses 4 abführen lässt.

In gleicher Weise kann auch das in den Grobgutausgang 16 fallende Grobgut aus dem Innenraum 12 abgeführt werden, wobei eine entsprechende Entnahmeanordnung in der Darstellung der Fig. 1 nicht zu sehen ist.

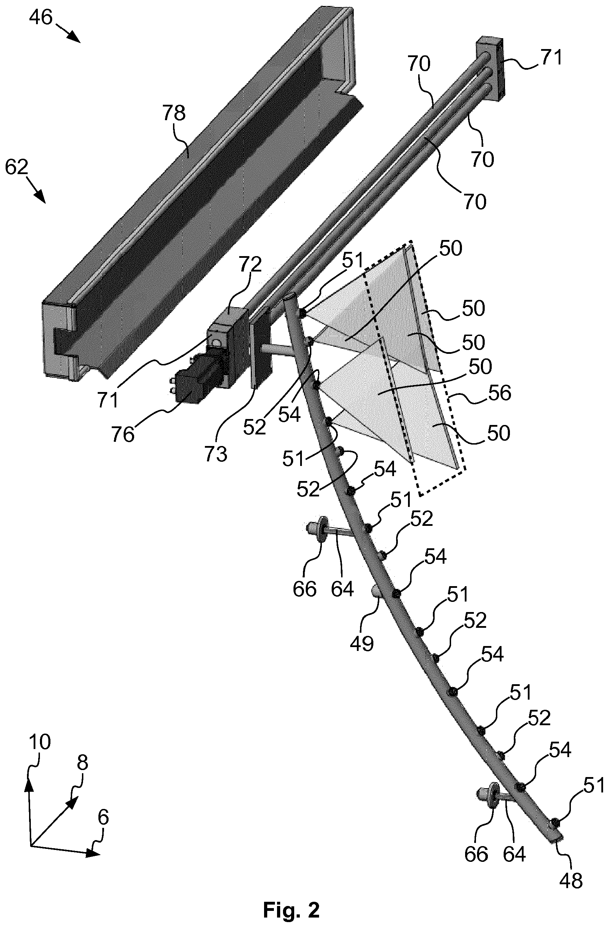

Das Bogensieb 28 der in Fig. 1 dargestellten Vorrichtung 2 muss insbesondere im Lebensmittelbereich aus hygienischen Gründen von Zeit zu Zeit gereinigt werden. Hierfür ist am Gehäuse 4 an der in der Längsrichtung 6 gesehenen Frontseite eine Zugangstür 42 angeordnet, über die sich der Innenraum 12 des Gehäuses 4 öffnen und so die Siebaufgabeseite 30 des Bogensiebes 28 freilegen lässt. Mittels Riegeln 44 lässt sich die Zugangstür 42 gegen ein unbeabsichtigtes Öffnen des Innenraumes 12 sichern. Reinigungspersonal kann so per Hand zwar die Siebaufgabeseite 30 des Bogensiebes 28 reinigen. Dieser Reinigungsvorgang per Hand ist allerdings zeitaufwändig und unwirtschaftlich, weshalb in der vorliegenden Ausführung auf Seiten der Siebdurchgangsseite 32 im Innenraum 12 des Gehäuses 4 eine Reinigungsvorrichtung 46 angeordnet ist, die nachstehend anhand der Fig. 1 und 2 näher beschrieben wird.

Die Reinigungsvorrichtung 46 besitzt einen Düsenarm 48, der an die konkave Form der Siebaufgabeseite 30 des Bogensiebes 28 angepasst ist. Der Düsenarm 48 besitzt einen Reinigungsflüssigkeitsanschluss 49, über den sich Reinigungsflüssigkeit 50 in ein nicht weiter gezeigtes Inneres des Düsenarmes 48 einfüllen lässt. Die Reinigungsflüssigkeit 50 aus dem Inneren des Düsenarmes 48 lässt sich anschließend über verschiedene Düsen 51, 52, 54 gegen die Siebdurchgangsseite 32 gerichtet ausgeben.

Allen Düsen 51, 52, 54 ist gemein, dass sie als Fächerdüsen ausgebildet und gegen die Siebdurchgangsseite 32 des Bogensiebes 28 gerichtet sind. Allerdings unterschieden sich die Düsen in ihren Winkeln, in denen sie sie gegen die Siebdurchgangsseite 32 des Bogensiebes 28 gerichtet sind. Ein erster Typ Düsen 50 ist parallel zur Zeichenebene ausgerichtet, so dass die Reinigungsflüssigkeit 50 in einem Winkel von annähernd 90° auf die Siebdurchgangsseite 32 des Bogensiebes 28 auftrifft. Ein zweiter Typ Düsen 52 ist in die Zeichnungsebene hinein gerichtet, während ein dritter Typ Düsen 54 aus der Zeichnungsebene heraus gerichtet ist.

Mit den Düsen 51, 52, 54 lässt sich so ein Wirkbereich 56 definieren, innerhalb dem die Reinigungsflüssigkeit aus den Düsen 51, 52, 54 auf die Siebdurchgangsseite 32 des Bogensiebes 28 in einer ganz bestimmten Lage des Düsenarmes 48 wirkt.

Um das Bogensieb 28 von seiner Siebdurchgangsseite 32 her vollständig reinigen zu können, ist der Wirkbereich 56 und damit der Düsenarm 48 entlang der Querrichtung 8 verschiebbar ausgeführt. Die verschiebbare Lagerung ist in der vorgliegenden Ausführung über ein erstes Linearlager 58, ein zweites Linearlager 60 und ein drittes Linearlager 62 realisert. Dabei sind das erste und zweite Linearlager 58, 60 gleich ausgeführt, allerdings an verschiedenen Stellen angeordnet.

Das erste und zweite Linearlager 58, 60 umfassen je eine entgegen der Längsrichtung 6 vom Düsenarm 48 abragende Achse 64, auf der je eine Kegelrolle 66 rollend gelagert ist. Jede Kegelrolle 66 lagert rollend auf je einer Führungsschiene 68, die sich in der Querrichtung 8 erstreckt. Jede Führungsschiene 68 ist in der Höhenrichtung 10 gesehen auf der Oberseite konkav ausgebildet, so dass sich auf die Führungsschiene 68 fallendes Siebgut dort nicht halten kann. Eventuell doch auf der Führungsschiene 68 liegenbleibendes Siebgut wird dann durch die entsprechende Kegelrolle 66 zermahlen. Um diese Funktion zu erreichen sollten Kegelrollen 66 und die entsprechenden Führungsschienen 68 entgegen der Höhenrichtung 10 und wenigstens entgegen der Längsrichtung 6 formschlüssig gewählt werden.

Im Gegensatz zum ersten und zweiten Linearlager 58, 60 ist das dritte Linearlager 62 als Schlittenlager ausgeführt und umfasst einen Schlitten 72, der auf zwischen zwei Halteklotzen 71 gehaltenen Führungsstangen 70 gleitend gelagert ist. An dem Schlitten 72 ist eine Halteplatte 73 beispielsweise verschweißt oder verschraubt gehalten. An der Halteplatte 73 wiederum ist der Düsenarm 48 in der Längsrichtung 6 gehalten, so dass sich der Düsenarm 48 durch Verschiebung des Schlittens 72 in der Querrichtung 8 hin- und herschieben lässt. Diese Verschiebung kann zwar manuell erfolgen, in der vorliegenden Ausführung erfolgt die Verschiebung allerdings über eine Gewindestange 74, die gedreht durch einen Motor 76 den Schlitten an einem nicht weiter dargestellten Innengewinde antreibt. Der Motor 76 erlaubt es, den Düsenarm 48 zeitlich definiert zu bewegen und das Bogensieb 28 zu reinigen.

Da das Schlittenlager 62 als Gleitlager ausgebildet ist, ist es zu seinem Schutz mit einer Abdeckhaube 78 abgedeckt.

Um den Düsenarm 48 weiter zu stabilisieren, kann dem ersten und zweiten Linearlager 58, 60 gegenüberliegend optional eine Lagesicherungsstange 80 angeordnet sein.

## Patentansprüche

1. Vorrichtung (2) zum Trennen eines Aufgabegutes in ein Grobgut und ein Siebgutgut, umfassend:
- ein sich in einer Längsrichtung (6), sich in einer quer zur Längsrichtung (6) liegenden Querrichtung (8) und sich in einer quer zur Längsrichtung (8) und quer zur Querrichtung (8) liegenden Höhenrichtung (10) erstreckendes und einen Innenraum (12) einhausendes Gehäuse (4) mit einem Aufgabegutzugang (14) zum Einführen des Aufgabegutes in den Innenraum (12), mit einem in der Höhenrichtung (10) gesehen unterhalb des Aufgabegutzugangs (14) angeordneten und aus dem Innenraum (12) führenden Grobgutausgang (16) und mit einem in der Höhenrichtung (10) gesehen unterhalb des Aufgabegutzugangs (14) angeordneten und aus dem Innenraum (12) führenden Siebgutausgang (18), und
- ein im Innenraum (12) angeordnetes und den Aufgabezugang (14) sowie den Grobgutausgang (16) vom Siebgutausgang (18) trennendes Bogensieb (28) mit einer zum Siebgutausgang (18) gerichteten Siebsdurchgangsseite (32) und einer der Siebdurchgangsseite (32) gegenüberliegenden Siebaufgabeseite (30),
**gekennzeichnet durch**
- eine auf die Siebdurchgangsseite (32) des Bogensiebs (28) gerichtete Spüldüse (51), welche eingerichtet ist, eine Reinigungsflüssigkeit (50) auf die Siebdurchgangsseite (32) des Bogensiebes (28) gerichtet auszugeben.

2. Vorrichtung (2) nach Anspruch 1, umfassend einen Düsenarm (48), auf dem die Spüldüse (51) angeordnet ist.

3. Vorrichtung (2) nach Anspruch 2, umfassend eine weitere auf dem Düsenarm (48) angeordnete Spüldüse (52), wobei die beiden Düsen (51, 52) eingerichtet sind, die Reinigungsflüssigkeit (50) in verschiedenen Richtungen auf die Siebdurchgangsseite (32) des Bogensiebes (28) gerichtet auszugeben.

4. Vorrichtung (2) nach Anspruch 3, wobei die beiden Düsen (51, 52) achsparallel bezüglich einer Flächennormalen des Bogensiebs (28) angeordnet sind.

5. Vorrichtung (2) nach einem der Ansprüche 2 bis 4, wobei das Bogensieb (28) in einer vom Aufgabezugang (14) zum Grobgutausgang (16) gesehenen Überlaufrichtung mit einer Bogenform und quer (8) zur Überlaufrichtung gesehen gerade ausgebildet ist, und wobei der Spülarm (48) an die Bogenform des Bogensiebes (28) angepasst ist.

6. Vorrichtung (2) nach Anspruch 5, umfassend ein Linearlager (58, 60), das den Spülarm (48) quer (8) zur Überlaufrichtung beweglich lagert.

7. Vorrichtung (2) nach Anspruch 6, wobei das Linearlager (58, 60) eine Kegelrolle (66) umfasst.

8. Vorrichtung (2) nach Anspruch 7, wobei die Kegelrolle (66) auf einer quer (8) zur Überlaufrichtung verlaufenden Führungsschiene (68) aufliegt, die aus der Höhenrichtung (10) gesehen in einem Querschnitt konkav ausgebildet ist.

9. Vorrichtung (2) nach Anspruch 7 oder 8, umfassend ein weiteres Linearlager (62), wobei die Kegelrolle (66) entgegen der Längsrichtung (6) ausgerichtet ist und das weitere Linearlager (62) den Spülarm (48) entgegen der Längsrichtung (6) beabstandet zur Kegelrolle (66) quer (8) zur Überlaufrichtung beweglich lagert.

10. Vorrichtung (2) nach einem der Ansprüche 6 bis 9, umfassend einen Motor (76) zum Bewegen des Spülarmes (48) auf dem Linearlager (58, 60).

## Claims

1. Device (2) for separating a feed material into a coarse material and a screening material, comprising:
- a housing (4) extending in a longitudinal direction (6), in a transverse direction (8) lying transversely to the longitudinal direction (6) and in a vertical direction (10) lying transversely to the longitudinal direction (6) and transversely to the transverse direction (8) and enclosing an interior space (12), with a feed material inlet (14) for introducing the feed material into the interior space (12), with a coarse material outlet (16) arranged below the feed material inlet (14), as seen in the vertical direction (10), and leading out of the interior space (12), and with a screening material outlet (18) arranged below the feed material inlet (14), viewed in the vertical direction (10), and leading out of the interior space (12), and
- a curved screen (28) arranged in the interior space (12) and separating the feed material inlet (14) and the coarse material outlet (16) from the screening material outlet (18), with a screen passage side (32) directed towards the screening material outlet (18) and a screening feed side (30) opposite the screening passage side (32),
**characterized by**
- a flushing nozzle (51) directed towards the screening passage side (32) of the curved screen (28), which is arranged to discharge a cleaning liquid (50) directed towards the screening passage side (32) of the curved screen (28).

2. Device (2) according to claim 1, comprising a nozzle arm (48) on which the flushing nozzle (51) is arranged.

3. Device (2) according to claim 2, comprising a further flushing nozzle (52) arranged on the nozzle arm (48), the two nozzles (51, 52) being arranged to discharge the cleaning liquid (50) directed in different directions towards the screening passage side (32) of the curved screen (28).

4. Device (2) according to claim 3, wherein the two nozzles (51, 52) are arranged axis-parallel with respect to a surface normal of the curved screen (28).

5. Device (2) according to any one of claims 2 to 4, wherein the curved screen (28) is formed with an curved shape as seen in an overflow direction from the feed inlet (14) to the coarse material outlet (16) and is straight as seen transversely (8) to the overflow direction, and wherein the flushing arm (48) is adapted to the curved shape of the curved screen (28).

6. Device (2) according to claim 5, comprising a linear bearing (58, 60) which movably supports the flushing arm (48) transversely (8) to the overflow direction.

7. Device (2) according to claim 6, wherein the linear bearing (58, 60) comprises a taper roller (66).

8. Device (2) according to claim 7, wherein the taper roller (66) rests on a guide rail (68) which runs transversely (8) to the overflow direction and is concave in cross-section viewed from the vertical direction (10).

9. Device (2) according to claim 7 or 8, comprising a further linear bearing (62), wherein the taper roller (66) is aligned opposite to the longitudinal direction (6) and the further linear bearing (62) movably supports the flushing arm (48) opposite to the longitudinal direction (6) at a distance from the taper roller (66) transversely (8) to the overflow direction.

10. Device (2) according to any one of claims 6 to 9, comprising a motor (76) for moving the flushing arm (48) on the linear bearing (58, 60).

## Revendications

1. Dispositif (2) pour séparer un produit d'alimentation en un produit grossier et un produit tamisé, comprenant:
- un boîtier (4) s'étendant dans une direction longitudinale (6), dans une direction transversale (8) perpendiculaire à la direction longitudinale (6) et dans une direction en hauteur (10) perpendiculaire à la direction longitudinale (6) et perpendiculaire à la direction transversale (8) et renfermant un espace intérieur (12), avec un accès d'alimentation (14) pour l'introduction du produit à charger dans l'espace intérieur (12), avec une sortie de produit grossier (16) disposée, vu dans le sens de la hauteur (10), en dessous de l'accès d'alimentation (14) et menant hors de l'espace intérieur (12) et avec une sortie de produit tamisé (18) disposée, vu dans le sens de la hauteur (10), en dessous de l'accès d'alimentation (14) et menant hors de l'espace intérieur (12), et
- un tamis courbe (28) disposé dans l'espace intérieur (12) et séparant l'accès d'alimentation (14) ainsi que la sortie de produit grossier (16) de la sortie de produit tamisé (18), avec un côté de passage de tamis (32) orienté vers la sortie de produit tamisé (18) et un côté de chargement de tamis (30) opposé au côté de passage de tamis (32),
**caractérisé par**
- une buse de rinçage (51) orientée vers le côté de passage de tamis (32) du tamis en courbe (28), qui est conçue pour délivrer un liquide de nettoyage (50) orienté vers le côté de passage de tamis (32) du tamis en courbe (28).

2. Dispositif (2) selon la revendication 1, comprenant un bras de buse (48) sur lequel est disposée la buse de rinçage (51).

3. Dispositif (2) selon la revendication 2, comprenant une autre buse de rinçage (52) disposée sur le bras de buse (48), les deux buses (51, 52) étant adaptées pour distribuer le liquide de nettoyage (50) dans des directions différentes, dirigé vers le côté de passage de tamis (32) du tamis en courbe (28).

4. Dispositif (2) selon la revendication 3, dans lequel les deux buses (51, 52) sont disposées parallèlement à l'axe par rapport à une normale à la surface du tamis courbe (28).

5. Dispositif (2) selon l'une des revendications 2 à 4, dans lequel le tamis courbe (28) est réalisé avec une forme courbe dans une direction de débordement vue depuis l'accès d'alimentation (14) vers la sortie de produit grossier (16) et est droit vu transversalement (8) à la direction de débordement, et dans lequel le bras de rinçage (48) est adapté à la forme courbe du tamis courbe (28).

6. Dispositif (2) selon la revendication 5, comprenant un palier linéaire (58, 60) qui supporte le bras de rinçage (48) de manière mobile transversalement (8) à la direction de débordement.

7. Dispositif (2) selon la revendication 6, dans lequel le palier linéaire (58, 60) comprend un rouleau conique (66).

8. Dispositif (2) selon la revendication 7, dans lequel le rouleau conique (66) repose sur un rail de guidage (68) qui s'étend transversalement (8) à la direction de débordement et qui, vu depuis la direction de la hauteur (10), est réalisé de manière concave dans une section transversale.

9. Dispositif (2) selon la revendication 7 ou 8, comprenant un autre palier linéaire (62), le rouleau conique (66) étant orienté à l'opposé de la direction longitudinale (6) et l'autre palier linéaire (62) logeant le bras de rinçage (48) de manière mobile à l'opposé de la direction longitudinale (6) à distance du rouleau conique (66) transversalement (8) à la direction de débordement.

10. Dispositif (2) selon l'une des revendications 6 à 9, comprenant un moteur (76) pour déplacer le bras de rinçage (48) sur le palier linéaire (58, 60).
